# EUROPEAN PATENT APPLICATION

(11) **EP 0 787 434 A1**
(43) Date of publication of application: **06.08.1997**
(21) Application number: 97200113.5
(22) Date of filing: 16.01.1997
(51) Int. Cl.: A21D 10/00, A21D 2/16

(54) **Free flowing cake-mix**

(30) Priority: 08.02.1996 EP 96300845
(71) Applicant: LODERS CROKLAAN B.V., NL-1521 AX Wormerveer (NL)
(72) Inventor: Kuin, Adrianus J., 1521 AZ Wormerveer (NL); Spiessens, Jacques, 1521 AZ Wormerveer (NL); Yoell, Richard W., 1521 AZ Wormerveer (NL)
(74) Representative: Joppe, Hermina L. P.

(57) **Abstract**

Free flowing cake-mix, comprising
5 - 45 wt% of free flowing cool melting powdered fat and 95 - 55 wt% of a mixture, comprising emulsifiers and flour
is obtained, if the fat has a solid fat content (NMR-pulse stab. at 26°C) of:
N₄₀ < 10
N₃₀ > 20
N₂₀ > 40

## Description

Cake-mixes, that contain fat are known in the prior art. However, these known mixes, if free flowing, contain only limited amounts of fats. This has as a consequence, that upon use of these mixes for the preparation of a cake-batter fat has to be added to the cake-ingredients, for else not enough fat would be present. Moreover, the fat applied in these mixes never was a cool melting fat. Therefore, cakes made from these mixes never displayed cool melting characteristics. Attempts to increase the fat-content of the cake-mix failed, as this increase in fat-content resulted in loss of the free flowing ability of the cake-mix. Therefore we have studied, whether we could make a cake-mix that was free flowing, whereas enough of a cool melting fat would be present in the mix, so that no separate fat-additions would be necessary, while the cakes made from these mixes would display cool melting characteristics. Such a free flowing cake-mix would be very convenient, as a batter could be made from it by only combining it with an aqueous composition, such as water or milk.

A dried emulsion comprising a fatphase, an emulsifier and a non-fatphase, encapsulating the fatphase is known from US 3.295.986. The non-fatphase never is flour, therefore these mixes are not well suitable as cake-mixes. A free flowing mix of a food improving suface active substance and a vegetable protein is disclosed in WO 94/08468. However these compositions cannot be applied as cake-mix.

We found that such free flowing mixes could be obtained by applying a specific fat-composition. Therefore our invention concerns in the first instance a free flowing cake-mix comprising 5 - 45 wt%, preferably 10 - 35 wt%, most preferably 15 - 30 wt% of a free flowing cool melting powdered fat, displaying a solid fat content (by NMR-pulse, stab. at 26°C) at the temperature indicated of:
N ₄₀ < 10, preferably < 5
N ₃₀ > 20, preferably > 30
N ₂₀ > 40, preferably > 60
and 95-55 wt %, preferably 90-65 wt%, most preferably 85-70 wt % of a mixture of at least emulsifiers and flour, optionally in the presence of egg-powder, sugar, flavours and leaveners.
In order to establish cool meltingness the fats preferably have a N₂₀ - N₃₀ of at least 25, more preferably at least 30. The solid fat content was measured by the NMR-pulse method on fats that were stabilised at 20°C for 40 hrs.

The cool melting fat that can be applied in the above mix is preferably selected from at least one fat of the group consisting of: cocoabutter; cocoabutter equivalents, such as palm-oil mid fraction, illipe, shea stearin and fractionated hydrogenated oils with N ₂₀ > 40, N ₃₀ >20 and N₄₀ <10.

Although any type of emulsifier could be used, we found that the best results are obtained, when a cold water dispensable emulsifier is applied. An example of such an emulsifier is Admul emulsponge® 2213 (from Quest Int.).

The level of emulsifier preferabley is 0.5-8 wt% on cake-mix; most preferably 1-6 wt%.

Also cake batters, comprising flour, cake-mix and aqueous composition are part of our invention. These batters preferably comprise:
- 0-500: weight parts of flour
- 100-1100: weight parts of our free flowing cake-mix
- 30-70: weight parts of aqueous composition

It should be realized that although we prefer to avoid separate additions of other ingredients, it is still possible to add ingredients like flour, egg-powder, sugar, flavour or leaveners to a batter obtained above.

Cake-batter, containing a fat with at least 35 wt% of (U₂S + U₃)-trigylcerides (U: unsat. fatty acid C₁₈+ ; S: sat fatty acid 12-24 C-atoms) are disclosed in our WO 95/04033. Therefore, such cake-batters are disclaimed here.

Cakes obtained after moulding of the batter (e.g. in a baking pan) and baking are also part of our invention.

### EXAMPLES

1. Preparation of cake-mix
1.1 Cryo milling of fat
   500 grams of fat with the N-line as mentioned in table I were cut into cubes of 1 cm³. These fatcubes were mixed with 500 g. of finely divided solid carbondioxide. The mixture was ground in a turmixblender during 1 min. The result was a finely divided fat powder.
1.2 Blending with other ingredients
   500 grams of the finely divided fat powder were blended with 1000 g. of a cake-mix, comprising sugar, wheat flour, modified starch, pyrophosphates, sodium bicarbonate, wheat starch, polyglycerol ester and glycerol lactopalmitate and with 50 g. of an emulsifier (Admul E.s. 2213, i.e. a mixture of monoglyceride and polyglycerolester on S.M.P.). The blending was performed in a Hobart N-50 mixer. The resulting mixture was free flowing and cool melting, when a fat with an N-line according to the invention was applied (cf table II).
1.3 A cake-batter was made from the cake-mixes obtained in 1.2. Herefor 1550 gram of the mixture obtained was mixed with 500 g eggs and 200g water. The ingredients were mixed in a Hobart N 50 until homogeneous, followed by 5 min. at high speed. The batter was distributed over a number of cake pans and baked for 55 min. at 160°C.
   The results are mentioned in Table III

**Table I**

| **Exp** | **Fat** | **N**_{**20**} | **N**_{**30**} | **N**_{**40**} |
|---|---|---|---|---|
| 1. | a mixture of partially hardened palm oil/soybean oil and rapeseed oil with palm oil/ rapeseed oil | 34* | 10* | 0 |
| 2. | hardened palm oil olein, m. pt 37°C | 70.3 | 38.5 | 4.8 |
| 3. | midfraction of fract. hardened bean oil, m. pt 39°C | 87.3 | 39.8 | 4.2 |
| 4. | a mixture of palm midfraction, shea stearin and illipe | 67 | 33 | 0 |
| 5. | a mixture of fractionated palm oil olein and fractionated palm oil 37 | > 80 | 56 | 15* |
| 6. | double fractionated palm oil stearin | 72 | 10* | 0 |
| 7. | a mixture of palm midfraction, and palm oil stearin | 88 | 54 | 0 |

| | | | | |
|---|---|---|---|---|
| * outside claim 1 | | | | |

**Table II**

| **Exp** | **Cake-mix** | **fat. powder** | **emulsifier** | **free-flowing** |
|---|---|---|---|---|
| 1. | 1000 g. | 500 g. | 50 g. | no |
| 2. | 1000 g. | 500 g. | 50 g. | yes |
| 3. | 1000 g. | 500 g. | 50 g. | yes |
| 4. | 1000 g. | 500 g. | 50 g. | yes |
| 5. | 1000 g. | 500 g. | 50 g. | yes |
| 6. | 1000 g. | 500 g. | 50 g. | no |
| 7. | 1000 g. | 500 g. | 50 g. | yes |

**Tabel III**

| **Exp** | **batter density** | **cool melting char.** |
|---|---|---|
| 1. | 0.87 | no |
| 2. | 0.75 | yes |
| 3. | 0.77 | yes |
| 4. | 0.70 | yes |
| 5. | 0.58 | no |
| 6. | 0.69 | yes |
| 7. | 0.67 | yes |

## Claims

1. Free-flowing cake-mix, comprising:
5 - 45 wt%, preferably 10 - 35 wt%, most preferably 15 - 30 wt% of a free flowing cool melting powdered fat, displaying a solid fat content (by NMR-pulse, stab. at 26°C) at the temperature indicated of:
N ₄₀ < 10, preferably < 5
N ₃₀ > 20, preferably > 30
N ₂₀ > 40, preferably > 60
and 95-55 wt %, preferably 90-65 wt%, most preferably 85-70 wt % of a mixture of at least emulsifiers and flour, optionally in the presence of egg-powder, sugar, flavours and leaveners.

2. Free-flowing cake-mix according to claim 1, where in the fat is selected from at least one fat of the group consisting of: cocoabutter; cocoabutter equivalents, such as palm-oil mid fraction, illipe, shea stearin and fractionated hydrogenated oils with N ₂₀ > 40, N ₃₀ >20 and N ₄₀ <10.

3. Free-flowing cake-mix according to claims 1-2, wherein the emulsifier is a cold water dispersible emulsifier.

4. Free flowing cake-mix according to claims 1-3, wherein the cake-mix contains 0.5-8 wt %, preferably 1-6 wt % of the emulsifier.

5. Cake-batter, comprising: flour, cake-mix and aqueous composition in a ratio of:
0 - 500 weight-parts of flour;
600 - 1100 weight-parts of the free flowing cake-mix, according to claims 1-4.
30 - 70 weight parts of an aqueous composition (water or milk),
with the prerequisite that the cake-mix according to claims 1-5 does not contain a fat with an (U₂S + U₃ ) - content of > 35 wt % (U = unsaturated fatty acids C₁₈₊; S = saturated fatty acids C₁₂ - C₂₄)

6. Cake, made by baking of a premoulded quantity of the cake-batter according to claim 5.
